(19)

Europäisches
Patentamt
European
Patent Office
Office européen
des brevets

(11) **EP 4 580 268 A1**

(12) **EUROPEAN PATENT APPLICATION**
published in accordance with Art. 153(4) EPC

(43) Date of publication:
**02.07.2025 Bulletin 2025/27**

(21) Application number: **23886133.0**

(22) Date of filing: **26.10.2023**

(51) International Patent Classification (IPC):
*H04W 52/42* (2009.01)      *H04W 52/14* (2009.01)
*H04W 52/24* (2009.01)      *H04W 52/32* (2009.01)
*H04W 52/36* (2009.01)      *H04W 8/24* (2009.01)
*H04W 72/23* (2023.01)      *H04B 7/0426* (2017.01)
*H04B 7/06* (2006.01)

(52) Cooperative Patent Classification (CPC):
**H04B 7/0426; H04B 7/06; H04W 8/24;
H04W 52/14; H04W 52/24; H04W 52/32;
H04W 52/34; H04W 52/36; H04W 52/42;
H04W 72/23**

(86) International application number:
**PCT/KR2023/016727**

(87) International publication number:
**WO 2024/096437 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022   KR 20220142907**

(71) Applicants:
• **Hyundai Motor Company
 Seoul 06797 (KR)**

• **Kia Corporation
 Seoul 06797 (KR)**

(72) Inventors:
• **LEE, Jeong Su
 Hwaseong-si, Gyeonggi-do 18280 (KR)**
• **HONG, Ui Hyun
 Hwaseong-si, Gyeonggi-do 18280 (KR)**

(74) Representative: **Isarpatent
Patent- und Rechtsanwälte
Barth Hassa Peckmann & Partner mbB
Friedrichstraße 31
80801 München (DE)**

(54) **METHOD AND DEVICE FOR UPLINK POWER CONTROL IN COMMUNICATION SYSTEM SUPPORTING MTRP**

(57)    Disclosed are a method and device for uplink power control in a communication system supporting MTRP. A method for a UE comprises the steps of: determining a first transmission power of a first panel among multiple panels of the UE; determining a second transmission power of a second panel among the multiple panels; performing first UL transmission via the first panel by using the first transmission power; and performing second UL transmission via the second panel by using the second transmission power.

FIG. 9

## Description

[Technical Field]

The present disclosure relates to a power control technique, and more particularly, to a technique for uplink power control in a communication system supporting multiple transmission and reception points (MTRP).

[Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, a terminal may perform communication with one or more transmission and reception points (TRPs) using multiple panels (e.g., a first panel and a second panel). For example, the terminal may perform communication with a first TRP using the first panel and may perform communication with the first TRP or a second TRP using the second panel. Since the terminal's maximum transmission power is limited, communication using the first panel and communication using the second panel can be performed considering the terminal's maximum transmission power. To improve communication efficiency between the terminal having multiple panels and one or more TRPs, a power control method for each of the multiple panels is required.

[Disclosure]

[Technical Problem]

The present disclosure is directed to providing a method and an apparatus for uplink power control in a communication system supporting multiple transmission and reception points (MTRP).

[Technical Solution]

A method of a user equipment (UE), according to exemplary embodiments of the present disclosure for achieving the above-described objective, may comprise: determining a first transmission power of a first panel among multiple panels of the UE; determining a second transmission power of a second panel among the multiple panels; performing a first uplink (UL) transmission via the first panel using the first transmission power; and performing a second UL transmission via the second panel using the second transmission power.

The method may further comprise: transmitting information of the multiple panels to a base station; and receiving, from the base station, information of panel(s) used for communication with one or more transmission and reception points (TRPs) connected to the base station among the multiple panels, wherein the information of the panel(s) may include information of the first panel and information of the second panel.

The information of the multiple panels may include at least one of a maximum transmission power of each of the multiple panels, a number of simultaneously available panels, or a combination of simultaneously available panels.

The method may further comprise: receiving, from a base station, information indicating a method of allocating transmission powers for the multiple panels, wherein the first transmission power and the second transmission power may be determined based on the indicated method.

A transmission power of the UE may be equally allocated to each of the multiple panels, the first transmission power may be equal to the second transmission power, and a sum of the first transmission power and the second transmission power may be less than or equal to the maximum transmission power of the UE.

A transmission power of the UE may be differentially allocated to each of the multiple panels in consideration of link qualities, and when a first link quality of the first panel is different from a second link quality of the second panel, the first transmission power and the second transmission power may be determined to be different.

When the first link quality is better than the second link quality, the first transmission power may be determined as the maximum transmission power of the first panel, and the second transmission power may be determined by considering a remaining transmission power of the UE.

The first link quality may be measured based on a first reference signal received from the first panel, and the second link quality may be measured based on a second reference signal received from the second panel.

When a third link quality of a third panel among the multiple panels is less than a quality threshold, the third panel may not be used for a third UL transmission.

Information of the quality threshold may be received from a base station, and the quality threshold may be an individual quality threshold set for each of the multiple panels or a common quality threshold set for all of the multiple panels.

A transmission power of the UE may be differentially allocated to each of the multiple panels in consideration of priorities of UL transmissions, and when a first priority of the first UL transmission is different from a second priority of the second UL transmission, the first transmission power and the second transmission power may be determined to be different.

A transmission power of the UE may be differentially allocated to each of the multiple panels in consideration of priorities and link qualities of UL transmissions; when a first priority of the first UL transmission is different from a second priority of the second UL transmission, the first transmission power and the second transmission power may be determined to be different; and when a first link quality of the first panel and a second link quality of the second panel are equal to or higher than a quality threshold, the first UL transmission and the second UL transmission may be performed.

The first UL transmission and the second UL transmission may be performed for a same TRP or different TRPs.

A user equipment (UE), according to exemplary embodiments of the present disclosure for achieving the above-described objective, may comprise at least one processor, wherein the at least one processor may cause the UE to perform: determining a first transmission power of a first panel among multiple panels of the UE; determining a second transmission power of a second panel among the multiple panels; performing a first uplink (UL) transmission via the first panel using the first transmission power; and performing a second UL transmission via the second panel using the second transmission power.

The at least one processor may further cause the UE to perform: transmitting information of the multiple panels to a base station; and receiving, from the base station, information of panel(s) used for communication with one or more transmission and reception points (TRPs) connected to the base station among the multiple panels, wherein the information of the panel(s) may include information of the first panel and information of the second panel.

The at least one processor may further cause the UE to perform: receiving, from a base station, information indicating a method of allocating transmission powers for the multiple panels, wherein the first transmission power and the second transmission power may be determined based on the indicated method.

A transmission power of the UE may be equally allocated to each of the multiple panels, the first transmission power may be equal to the second transmission power, and a sum of the first transmission power and the second transmission power may be less than or equal to the maximum transmission power of the UE.

A transmission power of the UE may be differentially allocated to each of the multiple panels in consideration of link qualities, and when a first link quality of the first panel is different from a second link quality of the second panel, the first transmission power and the second transmission power may be determined to be different.

A transmission power of the UE may be differentially allocated to each of the multiple panels in consideration of priorities of UL transmissions, and when a first priority of the first UL transmission is different from a second priority of the second UL transmission, the first transmission power and the second transmission power may be determined to be different.

A transmission power of the UE may be differentially allocated to each of the multiple panels in consideration of priorities and link qualities of UL transmissions; when a first priority of the first UL transmission is different from a second priority of the second UL transmission, the first transmission power and the second transmission power may be determined to be different; and when a first link quality of the first panel and a second link quality of the second panel are equal to or higher than a quality threshold, the first UL transmission and the second UL transmission may be performed.

[Advantageous Effects]

According to the present disclosure, a terminal can allocate a transmission power to each of multiple panels within the maximum transmission power supported by the terminal. The transmission power may be allocated equally among the multiple panels. Alternatively, the transmission power may be allocated differentially based on link qualities and/or priorities. The terminal may perform uplink (UL) transmission via multiple panels using the allocated transmission powers while staying within the terminal's maximum transmission power. By employing the above-described method, the terminal can efficiently allocate the transmission power across multiple panels, thereby enhancing communication performance.

[Description of Drawings]

FIG. 1 is a conceptual diagram illustrating a first exemplary embodiment of a communication system.

FIG. 2 is a block diagram illustrating a first exemplary embodiment of a communication node constituting a communication system.

FIG. 3 is a block diagram illustrating a first exemplary embodiment of communication nodes performing communication.

FIG. 4A is a block diagram illustrating a first exemplary embodiment of a transmission path.

FIG. 4B is a block diagram illustrating a first exemplary embodiment of a reception path.

FIG. 5 is a conceptual diagram illustrating a first exemplary embodiment of a system frame in a communication system.

FIG. 6 is a conceptual diagram illustrating a first exemplary embodiment of a subframe in a communication system.

FIG. 7 is a conceptual diagram illustrating a first exemplary embodiment of a slot in a communication system.

FIG. 8 is a conceptual diagram illustrating a first exemplary embodiment of a time-frequency resource in a communication system.

FIG. 9 is a conceptual diagram illustrating a first exemplary embodiment of a UL channel/signal transmission method in an intra-cell MTRP environment.

FIG. 10 is a conceptual diagram illustrating a first exemplary embodiment of a UL channel/signal transmission method in an inter-cell MTRP environment.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)). The signaling may refer to signaling between a base station and a terminal and/or signaling between terminals.

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'. In the present disclosure, information may be used to refer to an information element, a field, a field value, field information, and/or a parameter.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

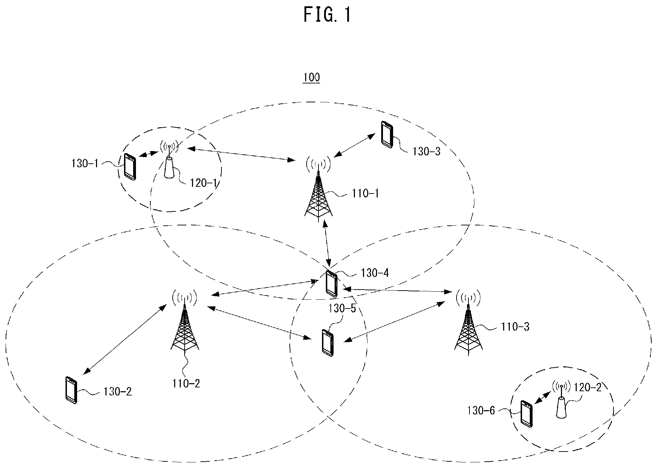

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3rd generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

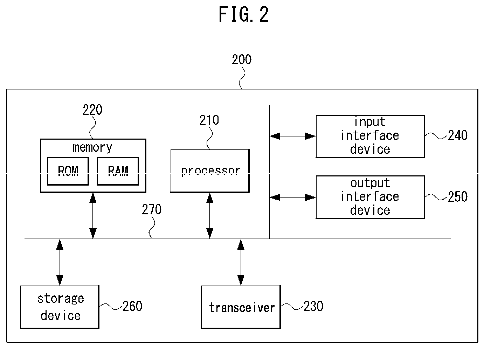

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a nonvolatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

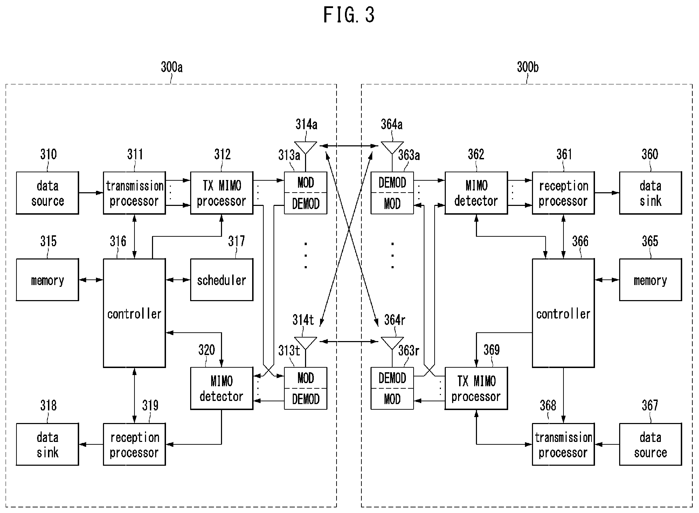

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

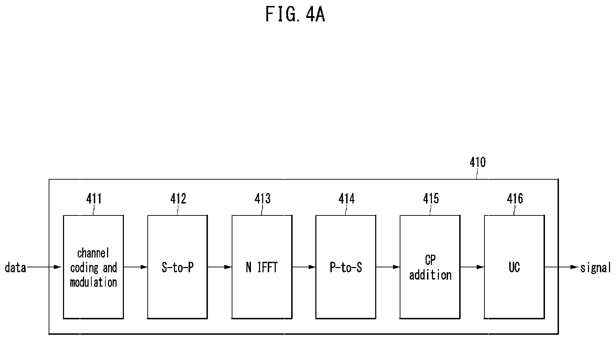

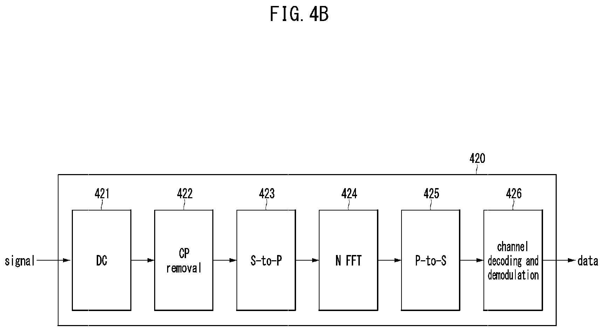

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

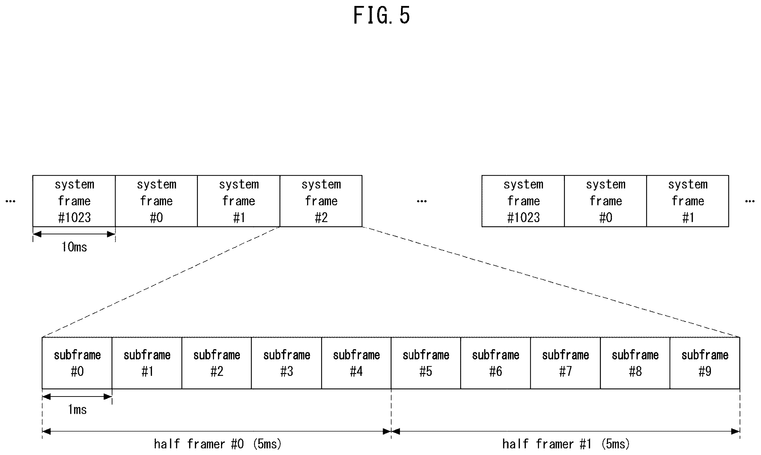

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

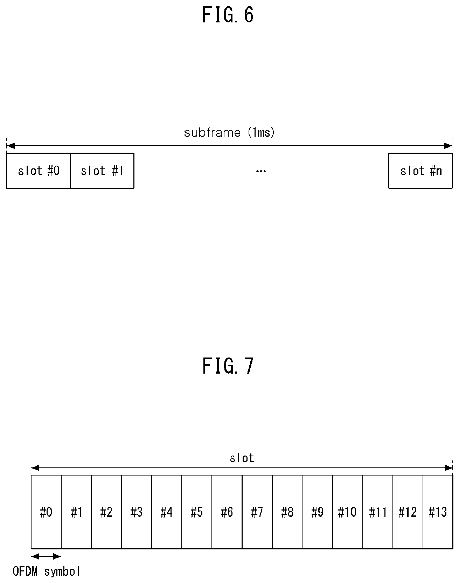

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

[Table 1]

| Subcarrier spacing | 15 kHz | 30 kHz | 60 kHz | 120 kHz | 240 kHz | 480 kHz |
|---|---|---|---|---|---|---|
| OFDM symbol length [μs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., $\mu = 0$), the length of slot may be 1 ms. In this case, one system frame may include 10 slots. When a subcarrier spacing is 30 kHz (e.g., $\mu = 1$), the length of slot may be 0.5 ms. In this case, one system frame may include 20 slots.

When a subcarrier spacing is 60 kHz (e.g., $\mu = 2$), the length of slot may be 0.25 ms. In this case, one system frame may include 40 slots. When a subcarrier spacing is 120 kHz (e.g., $\mu = 3$), the length of slot may be 0.125 ms. In this case, one system frame may include 80 slots. When a subcarrier spacing is 240 kHz (e.g., $\mu = 4$), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

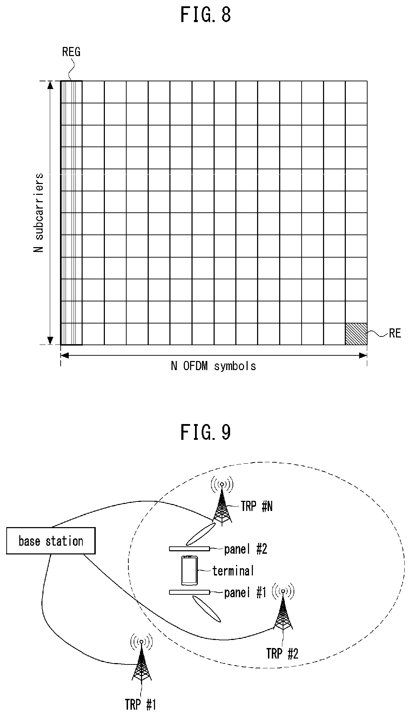

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) of the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

A communication system may support multiple transmission and reception points (MTRP) techniques. In the communication system supporting MTRP techniques, a base station may perform communication with a terminal using MTRP. The base station may be connected to MTRP through backhaul links, and the base station and MTRP may be physically separated. The MTRP techniques may be used to address issues of reduced quality of service (QoS) at cell-edge terminals and/or interference between cells. The MTRP techniques may provide additional communication paths in environments where non-line of sight (NLOS) paths are limited, such as a millimeter-wave band. The MTRP techniques may support coherent joint transmission (CJT) and non-coherent joint transmission (NCJT) schemes. In the CJT scheme, MTRP connected to the base station through the backhaul links may provide communication services to the terminal by performing synchronized cooperative communication. In the NCJT scheme, MTRP may provide communication services to the terminal without cooperation. In the NCJT scheme, each TRP may independently perform scheduling, precoding matrix selection, modulation, and coding.

In a communication system including one or more TRPs, downlink communication and uplink communication may be performed through link(s) between a terminal, TRP(s), and a base station. For example, an uplink transmission of the terminal may be received at the base station via TRP(s), and a downlink transmission of the base station may be received at the terminal via TRP(s).

A beam management procedure for TRP(s) may be performed. A procedure for determining and/or maintaining an optimal beam for communication between a TRP and the terminal may be defined as a set of L1/L2 procedures. The beam management procedure may be classified into four detailed procedures. For example, the beam management procedure may include a beam determination procedure, a beam measurement procedure, a beam reporting procedure, and a beam sweeping procedure. Based on a reciprocity characteristic of downlink (DL)/uplink (UL) channels between the TRP and the terminal, the terminal may configure transmission beam(s) using measurement value(s) for the DL channel, and may configure reception beam(s) using measurement value(s) for the UL channel. Additionally, based on the reciprocity characteristic of the DL and UL channels, the base station (e.g., TRP) may configure reception beam(s) using measurement value(s) for the DL channel, and the base station (e.g., TRP) may configure transmission beam(s) using measurement value(s) for the UL channel.

For a beam management procedure related to analog beamforming, a transmission configuration indicator (TCI) may be introduced for configuring a reception beam of the terminal for a specific channel/signal (e.g., PDSCH, CSI-RS, PDCCH). The base station may dynamically indicate quasi-colocation (QCL) information to the terminal using a TCI. For example, the base station may transmit DCI including the QCL information to the terminal. To reduce signaling overhead for QCL configuration of DL/UL channels and/or to simplify multi-beam operations, a TCI configuration using a unified TCI pool (e.g., unified TCI framework) may be introduced.

The base station may preconfigure a common TCI pool, which is commonly used and applied for DL/UL channels, for the terminal through RRC signaling. Within the common TCI pool, the base station may indicate a TCI for a specific DL/UL channel to the terminal using a MAC CE and/or DCI. The DL/UL channel may refer to a DL channel and/or a UL channel. The indication scheme (e.g., configuration scheme) of the TCI state may be classified into a joint TCI state indication scheme and a separate TCI state indication scheme. In the joint TCI state indication scheme, a common TCI state for DL/UL channels may be indicated. In the separate TCI state indication scheme, a TCI state for a DL channel and a TCI state for a UL channel may be indicated independently. When a reciprocity characteristic exists between the DL channel and the UL channel, the joint TCI state indication scheme may be used. When a reciprocity characteristic does not exist between the DL channel and the UL channel, the separate TCI state indication scheme may be used.

A terminal may perform communication using one or more panels. A terminal having multiple panels may support simultaneous transmission across multiple panels (STxMP). A terminal having a single panel may configure a single beam. A terminal having multiple panels may configure multiple beams. The terminal may transmit UL channel(s)/signal(s) using all panels. Alternatively, the terminal may select one or more panels (e.g., available panels) among all panels and may transmit UL channel(s)/signal(s) using one or more panels. The UL channel/signal may refer to a UL channel and/or a UL signal. A sum of transmission power(s) for UL channel(s)/signal(s) transmitted via the panels of the terminal may be equal to or less than the maximum transmission power supported by the terminal.

The first panel (e.g., first beam) of the terminal may be suitable for the first TRP, and the second panel (e.g., second beam) of the terminal may be suitable for the second TRP. Transmission powers at the panels of the terminal may be configured to be different. In this case, data transmission capacity may be improved, and power efficiency may be improved. In the UL channel/signal transmission procedure using multiple panels, a transmission power control method (e.g., configuration method) is required.

The terminal may support uplink power control specified in a section 7 of TS 38.213. For example, the terminal may determine a PUSCH transmission power $P_{\text{PUSCH},b,f,c}(i, j, q_d, l)$ in a PUSCH transmission occasion ($i$) based on Equation 1 below.

[Equation 1]

$$P_{\text{PUSCH},b,f,c}(i,j,q_d,l) =$$

$$\min \left\{ \begin{array}{c} P_{\text{CMAX},f,c}(i) \\ P_{\text{O\_PUSCH},b,f,c}(j) + 10\log_{10}\left(2^{\mu} \cdot M_{\text{RB},b,f,c}^{\text{PUSCH}}(i)\right) + \alpha_{b,f,c}(j) \cdot PL_{b,f,c}(q_d) + \Delta_{\text{TF},b,f,c}(i) + f_{b,f,c}(i,l) \end{array} \right\}$$

[dBm]

Here, c may refer to a serving cell, f may refer to a carrier, and b may refer to an active UL BWP. $P_{\text{CMAX},f,c}(i)$ may be the maximum output power (e.g., maximum transmission power) of the terminal. $P_{\text{OPUSCH},b,f,c}(j)$ may be a parameter configured as of a sum of $P_{\text{O\_NOMINAL,PUSCH},f,c}(j)$ and $P_{\text{O\_UE\_PUSCH},b,f,c}(j)$. $j \in \{0,1, \dots , J - 1\}$ may be defined.

The terminal may determine a PUCCH transmission power $P_{\text{PUCCH},b,f,c}(i, q_u, q_d, l)$ in a PUCCH transmission occasion ($i$) based on Equation 2 below.

[Equation 2]

$$P_{\text{PUCCH},b,f,c}(i,q_u,q_d,l) =$$

$$\min \left\{ \begin{array}{c} P_{\text{CMAX},f,c}(i) \\ P_{\text{O\_PUCCH},b,f,c}(q_u) + 10\log_{10}\left(2^{\mu} \cdot M_{\text{RB},b,f,c}^{\text{PUCCH}}(i)\right) + PL_{b,f,c}(q_d) + \Delta_{\text{F\_PUCCH}}(F) + \Delta_{\text{TF},b,f,c}(i) + g_{b,f,c}(i,l) \end{array} \right\}$$

[dBm]

The terminal may determine an SRS transmission power $P_{\text{SRS},b,f,c}(i, q_s, l)$ in an SRS transmission occasion ($i$) based on Equation 3 below.

[Equation 3]

$$P_{\text{SRS},b,f,c}(i,q_s,l) = \min\left\{\begin{array}{l} P_{\text{CMAX},f,c}(i), \\ P_{\text{O\_SRS},b,f,c}(q_s) + 10\log_{10}(2^{\mu} \cdot M_{\text{SRS},b,f,c}(i)) + \alpha_{\text{SRS},b,f,c}(q_s) \cdot PL_{b,f,c}(q_d) + h_{b,f,c}(i,l) \end{array}\right\} \quad [\text{dBm}]$$

The terminal may determine a PRACH transmission power $P_{\text{PRACH},b,f,c}(i)$ in a transmission occasion ($i$) based on Equation 4 below.

[Equation 4]

$$P_{\text{PRACH},b,f,c}(i) = min\{P_{\text{CMAX},f,c}(i), P_{\text{PRACH,target},f,c} + PL_{b,f,c}\} \quad [\text{dBm}]$$

Each parameter in Equations 1 to 4 may be a parameter defined in the section 7 of TS 38.213. The terminal may consider a path loss to determine a transmission power for a UL channel/signal. In Equations 1 to 4, *PL* may refer to the path loss. The terminal may determine compensation for the path loss based on a measurement result of a reference signal and may configure the transmission power considering the compensation for the path loss. A resource of the reference signal (e.g., RS resource) considered for determining the transmission power may be determined based on QCL information (e.g., QCL state).

When CORESETs are configured in an active DL BWP of a serving cell, the terminal may determine an RS resource index (e.g., RS resource considered for transmission power determination) based on a TCI state or QCL assumption of a CORESET having the lowest index among the CORESETs. When the CORESET has two TCI states, the terminal may determine the RS resource index based on the first TCI state of the CORESET. When CORESETs are not configured in an active DL BWP of the serving cell, the terminal may determine the RS resource index based on an active PDSCH TCI state having the lowest ID in the active DL BWP.

The maximum transmission power (e.g., maximum output power) of the terminal may vary depending on UE capability. The maximum transmission power of the terminal may be defined as $P_{\text{CMAX}}$. Since the maximum transmission power of the terminal is limited, it may be preferable to determine a transmission power for each panel considering UL channel/signal transmission performance (e.g., reception performance) of the terminal having multiple panels. Power prioritization rule(s) for supporting the above-described operation will be described.

The terminal may transmit panel information (e.g., Tx panel information and/or Rx panel information) to the base station. In the present disclosure, panel information may include Tx panel information and/or Rx panel information. The base station may receive the panel information from the terminal. The panel information may be included in UE capability information (e.g., UE capability report) transmitted by the terminal. The base station may obtain the panel information of the terminal by receiving the UE capability information from the terminal. The panel information may include at least one of panel-specific maximum transmission power, the number of simultaneously available panels (e.g., the number of panels supporting STxMP), or combination(s) of simultaneously available panels (e.g., combination(s) of panels supporting STxMP). Alternatively, the panel information may include an index indicating panel-specific maximum transmission power, the number of simultaneously available panels, and/or combination(s) of simultaneously available panels.

When the terminal has M panels, an index for each of the M panels may be configured. For example, a panel #1, panel #2, ..., and panel #M may be configured. M may be a natural number. The terminal may transmit indexes of panels to the base station to notify the number and/or combination of simultaneously available panels. Alternatively, the terminal may notify the base station of the number n of available panels by transmitting values of M and $M/2^n$ to the base station. When M is 4, n may be configured as 0, 1, 2, 3, or 4. For example, the base station may determine M=4 and n=2 based on the information received from the terminal.

When the number of simultaneously available panels is 2, the terminal may notify the base station of information on combination(s) of two panels (e.g., index(es) for the combination(s)). For example, the terminal may transmit information on (panel #1, panel #4) and/or (panel #2, panel #3) to the base station. The terminal may transmit information on one or more combinations to the base station, and each of the one or more combinations may include two or more panels. The base station may receive the information on combination(s) of simultaneously available panels from the terminal. A distance between panels belonging to the same combination may be large, and the panels belonging to the same combination may have a low correlation.

The base station may determine a combination (e.g., panels) used for communication based on the information on the combination(s) and locations of TRPs. The base station may transmit information on the determined combination and/or information (e.g., index(es), ID(s)) of TRP(s) communicating with the determined combination to the terminal through signaling. In this case, the base station may transmit mapping information of the determined combination and TRPs or mapping information of the determined panels and TRPs to the terminal. The terminal may receive, from the base station, information on the determined combination, information on TRP(s) communicating with the determined combination, mapping information of the determined combination and TRPs, and/or mapping information of the determined panels and TRPs. The terminal may determine (e.g., identify, configure) panels communicating with TRPs of the base station based on the information received from the base station. The terminal may determine a transmission power of each panel based on the following method(s) and may perform communication with the TRP(s) using the determined transmission powers.

**[Case #1: power prioritization rule for panels of a terminal in communication with a single TRP (STRP)]**

The terminal may determine a transmission power for each of multiple panels and may transmit UL channels/-signals to STRP via the multiple panels using the determined transmission powers. When the multiple panels of the terminal include a first panel and a second panel, a first UL channel/signal may be transmitted via the first panel, and a second UL channel/signal may be transmitted via the second panel. The first UL channel/signal and the second UL channel/signal may be transmitted in the same time resource (e.g., the same symbol(s), the same slot) and different frequency resources. As another method, the first UL channel/signal and the second UL channel/signal may be transmitted in the same time and frequency resources, in which case code multiplexing may be applied to the transmission of the first UL channel/signal and the second UL channel/signal for spatial diversity.

The terminal may determine (e.g., configure, allocate, adjust, control) the transmission power for each of multiple panels based on the following method(s). The following method(s) may be applied when a sum of the transmission powers (e.g., estimated transmission powers) for multiple panels is greater than the maximum transmission power of the terminal. Alternatively, the following method(s) may be performed to ensure that the sum of the transmission powers for multiple panels does not exceed the maximum transmission power of the terminal. The transmission power for each panel may be estimated considering reference signal(s) associated with a TCI state for a UL channel/signal allocated to each panel. For example, the terminal may estimate the transmission power for each of multiple panels based on Equation 1, Equation 2, Equation 3, and/or Equation 4. When the sum of the estimated transmission powers for multiple panels is greater than the maximum transmission power of the terminal, the transmission power for each panel may be controlled (e.g., adjusted) based on the following method(s).

**Method #1**

The terminal may allocate (e.g., configure) the same transmission power to all panels of the terminal and may transmit UL channels/signals via all panels using the same transmission power. In other words, the terminal may allocate its transmission power equally to all panels, and a sum of the transmission powers for all panels may be equal to or less than the maximum transmission power of the terminal. The terminal may determine the transmission power allocated to each panel of the terminal based on Equation 5 or Equation 6 below. $P_{PANEL}(m)$ may be a transmission power allocated to a panel #m of the terminal. m may be a panel index of the terminal, and m may be a natural number. $P_{CMAX}$ may be the maximum transmission power of the terminal. $n_{UL}$ may be the number of UL channels/signals scheduled for the terminal. $n_{PANEL}$ may be the number of all panels (or available panels) of the terminal.

[Equation 5]

$$P_{PANEL}(m) = \frac{P_{CMAX}}{n_{UL}}$$

[Equation 6]

$$P_{PANEL}(m) = \frac{P_{CMAX}}{n_{PANEL}}$$

According to Method #1, the transmission power of the terminal may be allocated equally to panels regardless of priorities of the UL channels/signals transmitted via the panels of the terminal. When all links between the panels of the terminal and TRPs have good quality, Method #1 may be useful. On the other hand, when at least one of the links between the panels of the terminal and TRPs has a poor quality, according to Method #1, communication performance in link(s) between panel(s) of the terminal and TRPs may be degraded.

**Method #2**

The terminal may measure link qualities between the panels of the terminal and TRPs. The link quality may be measured based on a reference signal received via a panel of the terminal. The terminal may allocate (e.g., configure) transmission powers differentially to the panels of the terminal considering the link qualities and may transmit UL channels/signals via the panels using the differentially allocated transmission powers.

Since transmission powers are allocated to the panels without considering link qualities according to Method #1, a transmission power may be allocated to a panel with a poor link quality. In this case, the transmission power may be used inefficiently, and communication performance may be degraded. On the other hand, according to Method #2, the terminal may allocate transmission powers differentially to the panels considering the link qualities between the panels and TRPs. Additionally, the terminal may select panel(s) for transmitting UL channel(s)/signal(s) considering the link qualities between the panels and TRPs and may transmit the UL channel(s)/signal(s) using the selected panel(s). Transmission powers may be allocated differentially to the selected panel(s) considering the link qualities. Therefore, the transmission power may be used efficiently. Detailed procedures according to Method #2 may be performed as follows.

The terminal may transmit panel information of the terminal to the base station. The panel information may include at least one of panel-specific maximum transmission power, the number of simultaneously available panels (e.g., the number of panels supporting STxMP), or combination(s) of simultaneously available panels (e.g., combination(s) of panels supporting STxMP). The base station may receive the panel information from the terminal. The base station may determine a quality threshold for each panel of the terminal (e.g., individual quality threshold) or a quality threshold for all panels (e.g., common quality threshold) based on the panel information. As another method, the base station may determine an individual quality threshold for each panel of the terminal or a common quality threshold for all panels without considering the panel information of the terminal. The base station may transmit information on the individual quality threshold (or the common quality threshold) to the terminal through signaling (e.g., system information signaling, RRC message signaling, MAC signaling, and/or PHY signaling). The terminal may receive information on the individual quality threshold (or the common quality threshold) from the base station.

The terminal may receive reference signals from the TRPs via the respective panels and may measure the link qualities between the panels and TRP based on the reference signals. The link quality may be L1-reference signal received power (L1-RSRP), L1-signal to interference plus noise ratio (L1-SINR), or the like. The terminal may compare the measured link quality of each panel with the individual quality threshold (e.g., common quality threshold) configured by the base station. The terminal may select panel(s) having a measured link quality equal to or greater than the individual quality threshold (e.g., common quality threshold) among all panels and may transmit UL channel(s)/signal(s) using the selected panel(s).

When the number of selected panels is 2 or more, the terminal may allocate a transmission power to each of the selected panels. The selected panels may refer to available panels. The terminal may allocate the transmission power to each of the available panels based on Equation 5 or Equation 6. Alternatively, the terminal may allocate the transmission power differentially to each of the available panels considering the link qualities. In this case, the terminal may allocate the transmission power to each of the available panels regardless of the type of UL channel/signal (e.g., PUCCH, PUSCH, PRACH, SRS). In other words, the terminal may allocate the transmission power to each of the available panels regardless of the priority of the UL channel/signal.

The terminal may sequentially allocate the transmission power starting from a panel with the best link quality. For example, when the available panels are the first panel and the second panel, the first panel has the best link quality, and the second panel has the second-best link quality after the first panel, the terminal may allocate a transmission power equal to the maximum transmission power of the first panel to the first panel and may allocate a part or all of the remaining transmission power to the second panel. In this case, the transmission power of the first panel may be greater than the transmission power of the second panel, and a sum of the transmission powers of the first panel and the second panel may be equal to or less than the maximum transmission power of the terminal.

As another method, the terminal may allocate a basic transmission power to each of the available panels and may sequentially allocate the remaining transmission power starting from a panel with the best link quality. In this case, the terminal may allocate the remaining transmission power to the panel without exceeding the maximum transmission power of the panel. Alternatively, the terminal may sequentially allocate the remaining transmission power starting from a panel with the lowest link quality considering QoS. The basic transmission power may correspond to the minimum required link quality, and a sum of the basic transmission powers and the remaining transmission power may be equal to or less than the maximum transmission power of the terminal. Information on the basic transmission power may be configured for the terminal through signaling from the base station.

**Method #3**

The terminal may allocate a transmission power differentially to each panel considering a type of a UL channel/signal transmitted from each panel (e.g., importance and/or priority according to the type). According to Method #2, the terminal may allocate the transmission power to each panel based on link qualities regardless of the type of UL channel/signal transmitted from each panel. Since the importance (e.g., priority) varies depending on the type of UL channel/signal, if the transmission power is allocated without considering the type of UL channel/signal, reception performance of an important UL channel/signal may be degraded. According to Method #3, the issue of Method #2 may be resolved. The priorities of UL channels/signals may be defined as shown in Table 2. In Table 2, a priority 1 may have the highest priority, and a priority 6 may have the lowest priority.

[Table 2]

| Priority | UL channel/signal |
|---|---|
| 1 | Transmission of a PRACH in a PCell |
| 2 | Transmision of a PUCCH with a high priority index, or transmission of a PUSCH with a high priority index |
| 3 | In case of the same priority index, transmission of a PUCCH including HARQ-ACK information, SR, and/or LRR, or transmission of a PUSCH including HARQ-ACK information |
| 4 | In case of the same priority index, transmission of a PUCCH including CSI, or transmission of a PUSCH including CSI |
| 5 | In case of the same priority index, transmission of a PUSCH not including HARQ-ACK information or CSI, transmission of a PUSCH for type-2 RA procedure, transmission of a PUSCH in a PCell |
| 6 | Transmission of an SRS, or transmission of a PRACH in a serving cell other than a PCell |

When different UL channels/signals are transmitted via multiple panels, the terminal may allocate a transmission power differentially to each of the multiple panels based on the priorities of the different UL channels/signals and may transmit the different UL channels/signals via the multiple panels using the differentially allocated transmission powers. For example, when SRS transmission is performed via the first panel of the terminal, PRACH transmission (e.g., PRACH transmission in a PCell) is performed via the second panel of the terminal, and PUCCH transmission is performed via the third panel of the terminal, the terminal may allocate a transmission power to the second panel first based on a prioritization rule (e.g., the priorities defined in Table 2). In this case, the terminal may allocate a transmission power equal to the maximum transmission power of the second panel to the second panel.

After allocating the transmission power to the second panel, the terminal may allocate a portion of the remaining transmission power to the third panel. After allocating the transmission power to the third panel, the terminal may allocate a portion or all of the remaining transmission power to the first panel. In this case, the terminal may sequentially allocate the remaining transmission power to the third panel and the first panel so that a basic transmission power is allocated to each of the third panel and the first panel. For example, the terminal may allocate a basic transmission power to the third panel and the first panel, respectively, and may sequentially allocate the remaining transmission power starting from the third panel. According to Method #3, reception performance of a UL channel/signal with a high priority may be improved, and communication between the terminal and the base station (e.g., TRP) may be reliably performed.

**Method #4**

Method #4 may be a combination of Method #2 and Method #3. The terminal may allocate a transmission power to each panel considering both link qualities and priorities of UL channels/signals. In Method #3, the terminal may allocate a transmission power differentially to each panel based on priorities of UL channels/signals without considering link qualities. In this case, a panel with a good link quality (e.g., panel that can achieve good performance with a low transmission power) may not be used.

According to Method #4, the terminal may first allocate a transmission power to each panel based on Method #3. For example, the terminal may allocate a transmission power to the second panel for PRACH transmission first, then allocate a transmission power to the third panel for PUCCH transmission, and finally allocate a transmission power to the first panel for SRS transmission. After the transmission power is allocated to each panel based on Method #3, the terminal may adjust (e.g., control) the allocated transmission power for each panel based on Method #2. For example, the terminal may compare the measured link quality of each panel with the individual quality threshold (or common quality threshold). When none of the first panel, second panel, and third panel of the terminal has a measured link quality lower than the individual quality threshold (or the common quality threshold), the terminal may transmit UL channels/signals via the multiple panels using the transmission powers allocated according to Method #3 without adjusting the transmission powers.

When at least one of the first panel, second panel, and third panel of the terminal has a measured link quality lower than the individual quality threshold (or common quality threshold), the terminal may adjust the transmission power of the panel with a measured link quality lower than the individual quality threshold (or common quality threshold) to zero. In other words, the terminal may exclude the panel with a low measured link quality from UL channel/signal transmission. For example, when the measured link quality of the third panel of the terminal is lower than the individual quality threshold (or common quality threshold), the terminal may configure the transmission power of the third panel to zero and may reallocate the transmission power originally allocated to the third panel to the second panel and/or the first panel. In this case, the terminal may transmit UL channels/signals using the second panel and the first panel. In other words, the third panel of the terminal may not be used for UL channel/signal transmission. According to Method #4, since the transmission power is allocated to each panel considering both link qualities and the priorities of the UL channels/signals, the transmission power of the terminal may be used efficiently.

The terminal may determine a transmission power for each panel using one of Method #1, Method #2, Method #3, or Method #4. As another method, the base station may indicate to the terminal method(s) to be used for allocating the transmission powers through signaling. For example, the base station may transmit configuration information for each method (e.g., detailed configuration information) to the terminal through signaling (e.g., system information signaling and/or RRC message signaling). The terminal may receive the configuration information for each method from the base station. The base station may transmit information indicating one of the configured methods (e.g., Method #1, Method #2, Method #3, or Method #4) to the terminal through signaling (e.g., MAC signaling and/or PHY signaling). The terminal may allocate a transmission power to each panel using the method indicated by the base station and may transmit UL channels/signals via multiple panels using the allocated transmission powers.

**[Case #2: power prioritization rule for panels of a terminal in communication with multiple TRPs (MTRP)]**

The terminal may determine a transmission power for each of multiple panels and may transmit UL channels/-signals to MTRP via the multiple panels using the determined transmission powers. The terminal may perform communication with each TRP using one or more panels. In other words, a TRP may be mapped to one or more panels of the terminal. In communication between the multiple panels of the terminal and one TRP among MTRP, transmission powers may be allocated based on the method described in Case #1 (e.g., Method #1, Method #2, Method #3, or Method #4). The method described in Case #1 (e.g., Method #1, Method #2, Method #3, or Method #4) may be applied to Case #2 on a TRP-by-TRP basis.

The base station (e.g., serving base station, serving cell) may be aware of information on multiple TRPs providing communication services to the terminal (e.g., terminal in the RRC connected state). The base station may transmit scheduling information for UL communication with multiple TRPs (e.g., scheduling information for CJT) to the terminal using control information (e.g., DCI). The terminal may receive the scheduling information and may perform UL communication with multiple TRPs based on the scheduling information. As another method, each of multiple TRPs may transmit scheduling information for UL communication (e.g., scheduling information for NCJT) to the terminal using control information (e.g., DCI). The terminal may receive the scheduling information and may perform UL communication with each of multiple TRPs based on the scheduling information.

Hereinafter, a method for allocating a transmission power to each panel of the terminal in an intra-cell MTRP environment and a method for allocating a transmission power to each panel of the terminal in an inter-cell MTRP environment will be described. For convenience of description in the present disclosure, it may be assumed that one TRP is mapped to one panel of the terminal. The exemplary embodiments of the present disclosure may be applied not only to the case where one TRP is mapped to one panel of the terminal but also to a case where one TRP is mapped to multiple panels of the terminal.

FIG. 9 is a conceptual diagram illustrating a first exemplary embodiment of a UL channel/signal transmission method in an intra-cell MTRP environment.

As shown in FIG. 9, a base station may be connected to MTRP (e.g., TRP #1, TRP #2, ..., TRP #N), and the TRP #2 and TRP #N may belong to the same cell. N may be a natural number. The base station (e.g., MTRP) may determine a beam pair and/or TRP-panel mapping by performing a beam management procedure with the terminal. The beam pair may refer to a beam pair between a transmission beam of a TRP and a reception beam of the terminal and/or a beam pair between a reception beam of the TRP and a transmission beam of the terminal. According to TRP-panel mapping, a panel #1 of the terminal may be mapped to the TRP #2, and a panel #2 of the terminal may be mapped to the TRP #N. In other words, the terminal may perform communication with the TRP #2 using the panel #1, and the terminal may perform communication with the TRP #N using the panel #2.

In the intra-cell MTRP environment, the base station may comprehensively perform scheduling for DL communication and/or UL communication. For example, the base station may transmit scheduling information for communication between MTRP and the terminal at once using single control information (e.g., single DCI). As another method, the base station may transmit scheduling information for communication between MTRP and the terminal using multiple pieces of control information (e.g., multiple DCIs), respectively. The number of multiple pieces of control information may be equal to the number of multiple TRPs performing communication with the terminal. The method described in Case #1 (e.g., Method #1, Method #2, Method #3, and/or Method #4) may be applied to the exemplary embodiment of FIG. 9 on a TRP-by-TRP basis.

TRP(s) for DL communication and TRP(s) for UL communication may differ depending on presence of a reciprocity characteristic for the DL and UL channels. The terminal may transmit the same UL channel/signal or different UL channels/signals to MTRP. Since the maximum transmission power of the terminal is limited, at least one panel among all panels of the terminal may not be used for UL channel/signal transmission.

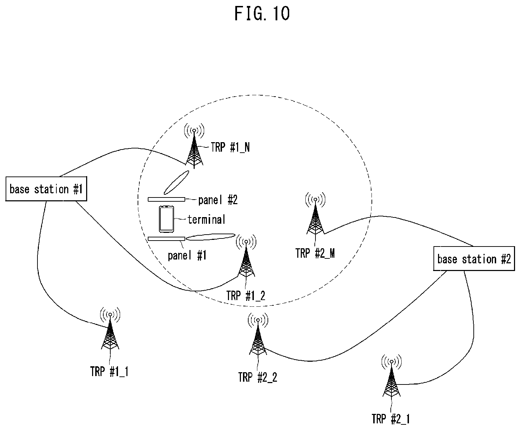

FIG. 10 is a conceptual diagram illustrating a first exemplary embodiment of a UL channel/signal transmission method in an inter-cell MTRP environment.

As shown in FIG. 10, a base station #1 may be connected to MTRP (e.g., TRP #1_1, TRP #1_2, ..., TRP #1_N), and N may be a natural number. The base station #1 (e.g., TRP #1_x) may determine a beam pair and/or TRP-panel mapping by performing a beam management procedure with the terminal. The beam pair may refer to a beam pair between a transmission beam of the TRP #1_x and a reception beam of the terminal and/or a beam pair between a reception beam of the TRP #1_x and a transmission beam of the terminal. According to TRP-panel mapping, a panel #2 of the terminal may be mapped to the TRP #1_N of the base station #1. In other words, the terminal may perform communication with the TRP #1_N using the panel #2.

A base station #2 may be connected to MTRP (e.g., TRP #2_1, TRP #2_2, ..., TRP #2_M), and M may be a natural number. The base station #2 (e.g., TRP #2_x) may determine a beam pair and/or TRP-panel mapping by performing a beam management procedure with the terminal. The beam pair may refer to a beam pair between a transmission beam of the TRP #2_x and a reception beam of the terminal and/or a beam pair between a reception beam of the TRP #2_x and a transmission beam of the terminal. According to TRP-panel mapping, the panel #1 of the terminal may be mapped to the TRP #2_M of base station #2. In other words, the terminal may perform communication with the TRP #2_M using the panel #1.

The method(s) described in Case #1 (e.g., Method #1, Method #2, Method #3, and/or Method #4) may be applied to the exemplary embodiment of FIG. 10 on a TRP-by-TRP basis. When Method #2 is applied, the terminal may determine available panel(s) based on link qualities after TRP-panel mapping is determined through the beam management procedure. In this case, TRP-panel mapping may be modified considering link qualities.

When Method #3 is applied, the terminal may allocate (e.g., adjust, control) a transmission power to a panel mapped to each TRP considering a priority of a UL channel/signal to be transmitted to each TRP. When Method #4 is applied, the terminal may select available panel(s) based on link qualities and may allocate (e.g., adjust, control) a transmission power to each of the available panels considering a priority of a UL channel/signal.

In the exemplary embodiment of FIG. 10, the panel #1 of the terminal may be mapped to the TRP #2_M of base station #2, and the panel #2 of the terminal may be mapped to the TRP #1_N of base station #1. Due to the limitation of the maximum transmission power of the terminal, the terminal may transmit a UL channel/signal using only one of the panel #1 and panel #2. For example, the terminal may transmit the UL channel/signal to the TRP #1_N connected to the base station #1 using only the panel #2. In this case, the TRP #2_M connected to the base station #2 may not receive the UL channel/signal from the terminal. The base station #2 may transmit information indicating that the UL channel/signal from the terminal has not been received to the base station #1. The base station #1 may determine, based on the information received from the base station #2, that the UL channel/signal from the terminal has not been received at the base station #2 (e.g., TRP #2_M) and may forward the UL channel/signal received from the terminal to the base station #2. The base station #2 may receive the UL channel/signal of the terminal from the base station #1.

As another method, the terminal may transmit information to the base station #1 indicating that the UL channel/signal is not transmitted to the TRP #2_M (e.g., base station #2). The base station #1 may determine, based on the information received from the terminal, that the UL channel/signal of the terminal is not transmitted to the base station #2 (e.g., TRP #2_M) and may forward the UL channel/signal received from the terminal to the base station #2. The base station #2 may receive the UL channel/signal of the terminal from the base station #1.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), comprising:

   determining a first transmission power of a first panel among multiple panels of the UE;
   determining a second transmission power of a second panel among the multiple panels;
   performing a first uplink (UL) transmission via the first panel using the first transmission power; and
   performing a second UL transmission via the second panel using the second transmission power.

2. The method according to claim 1, further comprising:

   transmitting information of the multiple panels to a base station; and
   receiving, from the base station, information of panel(s) used for communication with one or more transmission and reception points (TRPs) connected to the base station among the multiple panels,
   wherein the information of the panel(s) includes information of the first panel and information of the second panel.

3. The method according to claim 2, wherein the information of the multiple panels includes at least one of a maximum transmission power of each of the multiple panels, a number of simultaneously available panels, or a combination of simultaneously available panels.

4. The method according to claim 1, further comprising: receiving, from a base station, information indicating a method of allocating transmission powers for the multiple panels,
   wherein the first transmission power and the second transmission power are determined based on the indicated method.

5. The method according to claim 1, wherein a transmission power of the UE is equally allocated to each of the multiple panels, the first transmission power is equal to the second transmission power, and a sum of the first transmission power and the second transmission power is less than or equal to the maximum transmission power of the UE.

6. The method according to claim 1, wherein a transmission power of the UE is differentially allocated to each of the multiple panels in consideration of link qualities, and when a first link quality of the first panel is different from a second link quality of the second panel, the first transmission power and the second transmission power are determined to be different.

7. The method according to claim 6, wherein when the first link quality is better than the second link quality, the first transmission power is determined as the maximum transmission power of the first panel, and the second transmission power is determined by considering a remaining transmission power of the UE.

8. The method according to claim 6, wherein the first link quality is measured based on a first reference signal received from the first panel, and the second link quality is measured based on a second reference signal received from the second panel.

9. The method according to claim 6, wherein when a third link quality of a third panel among the multiple panels is less than a quality threshold, the third panel is not used for a third UL transmission.

10. The method according to claim 9, wherein information of the quality threshold is received from a base station, and the quality threshold is an individual quality threshold set for each of the multiple panels or a common quality threshold set for all of the multiple panels.

11. The method according to claim 1, wherein a transmission power of the UE is differentially allocated to each of the multiple panels in consideration of priorities of UL transmissions, and when a first priority of the first UL transmission is different from a second priority of the second UL transmission, the first transmission power and the second transmission power are determined to be different.

12. The method according to claim 1, wherein a transmission power of the UE is differentially allocated to each of the multiple panels in consideration of priorities and link qualities of UL transmissions; when a first priority of the first UL transmission is different from a second priority of the second UL transmission, the first transmission power and the second transmission power are determined to be different; and when a first link quality of the first panel and a second link quality of the second panel are equal to or higher than a quality threshold, the first UL transmission and the second UL transmission are performed.

13. The method according to claim 1, wherein the first UL transmission and the second UL transmission are performed for a same TRP or different TRPs.

14. A user equipment (UE) comprising at least one processor, wherein the at least one processor causes the UE to perform:

   determining a first transmission power of a first panel among multiple panels of the UE;
   determining a second transmission power of a second panel among the multiple panels;
   performing a first uplink (UL) transmission via the first panel using the first transmission power; and
   performing a second UL transmission via the second panel using the second transmission power.

15. The UE according to claim 14, wherein the at least one processor further causes the UE to perform:

   transmitting information of the multiple panels to a base station; and
   receiving, from the base station, information of panel(s) used for communication with one or more transmission and reception points (TRPs) connected to the base station among the multiple panels,
   wherein the information of the panel(s) includes information of the first panel and information of the second panel.

16. The UE according to claim 14, wherein the at least one processor further causes the UE to perform: receiving, from a base station, information indicating a method of allocating transmission powers for the multiple panels,
   wherein the first transmission power and the second transmission power are determined based on the indicated method.

17. The UE according to claim 14, wherein a transmission power of the UE is equally allocated to each of the multiple panels, the first transmission power is equal to the second transmission power, and a sum of the first transmission power and the second transmission power is less than or equal to the maximum transmission power of the UE.

18. The UE according to claim 14, wherein a transmission power of the UE is differentially allocated to each of the multiple panels in consideration of link qualities, and when a first link quality of the first panel is different from a second link quality of the second panel, the first transmission power and the second transmission power are determined to be different.

19. The UE according to claim 14, wherein a transmission power of the UE is differentially allocated to each of the multiple panels in consideration of priorities of UL transmissions, and when a first priority of the first UL transmission is different from a second priority of the second UL transmission, the first transmission power and the second transmission power are determined to be different.

20. The UE according to claim 14, wherein a transmission power of the UE is differentially allocated to each of the multiple panels in consideration of priorities and link qualities of UL transmissions; when a first priority of the first UL transmission is different from a second priority of the second UL transmission, the first transmission power and the second transmission power are determined to be different; and when a first link quality of the first panel and a second link quality of the second panel are equal to or higher than a quality threshold, the first UL transmission and the second UL transmission are performed.

FIG. 1

FIG. 2

200

220

210

memory

| ROM | RAM |

processor

270

input
interface
device ~240

output
interface
device ~250

storage
device ~260

transceiver ~230

FIG. 3

FIG. 4A

EP 4 580 268 A1

## FIG. 4B

420

| 421 | 422 | 423 | 424 | 425 | 426 |
|---|---|---|---|---|---|

signal → | DC | → | CP removal | → | S-to-P | → | N FFT | → | P-to-S | → | channel decoding and demodulation | → data

# FIG. 5

| system frame #1023 | system frame #0 | system frame #1 | system frame #2 | ... | system frame #1023 | system frame #0 | system frame #1 | ... |

$\vdash$ 10ms $\dashv$

| subframe #0 | subframe #1 | subframe #2 | subframe #3 | subframe #4 | subframe #5 | subframe #6 | subframe #7 | subframe #8 | subframe #9 |

$\vdash$ 1ms $\dashv$

half framer #0 (5ms)　　　　half framer #1 (5ms)

# FIG. 6

# FIG. 7

FIG. 8

FIG. 9

FIG. 10

## INTERNATIONAL SEARCH REPORT

| International application No. |
|---|
| **PCT/KR2023/016727** |

### A. CLASSIFICATION OF SUBJECT MATTER

**H04W 52/42**(2009.01)i; **H04W 52/14**(2009.01)i; **H04W 52/24**(2009.01)i; **H04W 52/32**(2009.01)i; **H04W 52/36**(2009.01)i; **H04W 8/24**(2009.01)i; **H04W 72/23**(2023.01)i; **H04B 7/0426**(2017.01)i; **H04B 7/06**(2006.01)i

According to International Patent Classification (IPC) or to both national classification and IPC

### B. FIELDS SEARCHED

Minimum documentation searched (classification system followed by classification symbols)

H04W 52/42(2009.01); H04B 7/06(2006.01); H04W 52/14(2009.01); H04W 52/24(2009.01); H04W 52/30(2009.01); H04W 52/36(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다중 패널들(multiple panels), 송신 전력(transmit power), 업링크 전송(uplink transmission)

### C. DOCUMENTS CONSIDERED TO BE RELEVANT

| Category* | Citation of document, with indication, where appropriate, of the relevant passages | Relevant to claim No. |
|---|---|---|
| X | WO 2020-197292 A1 (LG ELECTRONICS INC.) 01 October 2020 (2020-10-01)<br>See paragraphs [0356], [0371] and [0444]-[0462]; claim 7; and figure 14. | 1,5,11,14,17,19 |
| Y | | 2-4,6-10,12-13,15-16,18,20 |
| Y | US 2020-0267663 A1 (XU, Kai et al.) 20 August 2020 (2020-08-20)<br>See paragraph [0440]; and claims 1 and 6-7. | 2-4,6-10,12-13,15-16,18,20 |
| A | WO 2021-212451 A1 (QUALCOMM INCORPORATED) 28 October 2021 (2021-10-28)<br>See paragraphs [0080]-[0084]; and figure 5. | 1-20 |
| A | US 2021-0297959 A1 (COMCAST CABLE COMMUNICATIONS, LLC) 23 September 2021 (2021-09-23)<br>See paragraphs [0516]-[0520]; and figure 55. | 1-20 |

☑ Further documents are listed in the continuation of Box C.　　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 February 2024** | **08 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/016727** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2022-027306 A1 (APPLE INC.) 10 February 2022 (2022-02-10)<br>See paragraph [0108]; and figure 8. | 1-20 |

Form PCT/ISA/210 (second sheet) (July 2022)

## INTERNATIONAL SEARCH REPORT
### Information on patent family members

International application No.

**PCT/KR2023/016727**

| Patent document cited in search report | | | Publication date (day/month/year) | Patent family member(s) | | | Publication date (day/month/year) |
|---|---|---|---|---|---|---|---|
| WO | 2020-197292 | A1 | 01 October 2020 | US | 2022-0174609 | A1 | 02 June 2022 |
| US | 2020-0267663 | A1 | 20 August 2020 | US | 10856237 | B2 | 01 December 2020 |
| | | | | US | 11337164 | B2 | 17 May 2022 |
| | | | | US | 2021-0105727 | A1 | 08 April 2021 |
| | | | | US | 2022-0240193 | A1 | 28 July 2022 |
| WO | 2021-212451 | A1 | 28 October 2021 | CN | 115413423 | A | 29 November 2022 |
| | | | | EP | 4140203 | A1 | 01 March 2023 |
| | | | | US | 2023-0122357 | A1 | 20 April 2023 |
| US | 2021-0297959 | A1 | 23 September 2021 | CA | 3112971 | A1 | 18 September 2021 |
| | | | | CN | 115669098 | A | 31 January 2023 |
| | | | | EP | 4122253 | A1 | 25 January 2023 |
| | | | | JP | 2023-164993 | A | 14 November 2023 |
| | | | | JP | 2023-518807 | A | 08 May 2023 |
| | | | | JP | 7349584 | B2 | 22 September 2023 |
| | | | | KR | 10-2023-0006816 | A | 11 January 2023 |
| | | | | US | 11689235 | B2 | 27 June 2023 |
| | | | | US | 11757483 | B2 | 12 September 2023 |
| | | | | US | 2021-0297104 | A1 | 23 September 2021 |
| | | | | WO | 2021-188764 | A1 | 23 September 2021 |
| WO | 2022-027306 | A1 | 10 February 2022 | CN | 116097574 | A | 09 May 2023 |
| | | | | US | 2023-0155655 | A1 | 18 May 2023 |

Form PCT/ISA/210 (patent family annex) (July 2022)